Europäisches Patentamt

European Patent Office

Office européen des brevets

(11) Publication number: **0 483 475 A2**

# EUROPEAN PATENT APPLICATION

(21) Application number: **91114162.0**

(22) Date of filing: **23.08.91**

(51) Int. Cl.5: **F16C  13/00**, B29D 30/02, B65G 39/04

(30) Priority: **31.10.90 JP 114334/90 U**

(43) Date of publication of application:
**06.05.92 Bulletin  92/19**

(84) Designated Contracting States:
**DE FR GB**

(71) Applicant: **SOMAR CORPORATION**
**11-2, Ginza 4-chome Chuo-ku**
**Tokyo 104(JP)**

(72) Inventor: **Moriguchi, Kazutomo**
**8-29-29, Aoyagi-cho**
**Souka-shi, Saitama(JP)**

(74) Representative: **Boeters, Hans Dietrich, Dr. et al**
**Boeters & Bauer Bereiteranger 15**
**W-8000 München 90(DE)**

(54) **Resin roller.**

(57) A resin roller is made up of an annular ring member made of ultra-high-molecular-weight polyethylene and a cylindrical member made of reinforced resin having a usage critical PV valve in the air of at least 0.2 MPa·m/s. The cylindrical portion is engagedly fixed within a through hole of the annular ring member. A resin roller of superior durability and lightness results from this construction.

FIG. 1(a)

FIG. 1(b)

EP 0 483 475 A2

# FIELD OF THE INVENTION

The present invention relates to a resin roller which is superior in lightness and durability.

# BACKGROUND OF THE INVENTION

Traditionally, resin rollers of all sorts have been known. In general, polyamide, polyacetal, polyurethane rubber, etc. are used as resin for the rollers.

Such conventional resin rollers, however, do not possess sufficient wear and impact resistance, moreover, with the specific gravity of more than 1, they are not satisfactory either in terms of lightness.

Rollers for use on both land and water in amusement parks and carrier rollers of a conveyor belt are made of metal or the above-mentioned resin. When such rollers are let drop in the water by mistake, they sink rapidly, and it is difficult to recover them from the water once they have sunk.

# SUMMARY OF THE INVENTION

An object of the present invention is to provide a resin roller which is superior in lightness and durability. A further object of the invention is to provide a resin roller which is superior in lightness and durability and further which may float on the water.

The inventors of the present invention have concentrated their energies on a study to solve the above-mentioned problems and found out as a result that ultra-high-molecular-weight polyethylene, having a specific gravity of not more than 1, is a superior material for use in a roller in terms of wear and impact resistance, and is also a handy material for a light roller which can float on the water. The usage critical value PV of ultra-high-molecular-weight polyethylene is as high as 1.1 MPA•m/s in the water, however, it is as low as 0.13 MPA•m/s in the air, and due to this defect, such a resin roller cannot be put to practical use. Therefore, the inventors have examined the problem for improvement and found out that their objective could be attained by laminating a resin material with a usage critical value in the air PV of at least 0.2 MPa•m/s onto the inner surface of the resin roller.

More particularly, in accordance with the present invention, there is provided a resin roller comprising a cylindrical portion, being made of reinforced resin with a usage critical value in the air PV of at least 0.2 MPa•m/s and engagedly fixed within the hole of an annual ring body made of ultra-high-molecular-weight polyethylene.

The viscometric molecular weight of ultra-high-molecular-weight polyethylene used as a resin material of a roller main body of the present invention is 1 million and over, preferably 2 million and over. Such materials as, for example, HI-ZEXMILLION (Mitsui Petrochemical Industry), HOSTALEN GUR (Hoechst), SUNFINE UH (Asahi Chemical Industry Co., Ltd.), and others can be used. The density of this ultra-high-molecular-weight polyethylene is about 0.94 g/cm$^3$.

The annular ring body used as a roller main body of the present invention can be produced through machining a round rod or a plate made of ultra-high-molecular-weight polyethylene, or through compression molding or injection molding of the resin. Additives such as pigment, lubricant, and stabilizer may be added in ultra-high-molecular-weight polyethylene used as a molding material; the quantity of the additives should be within a range as not to affect the lightness of the roller.

Resin with a usage critical value in the air PV of 0.2 MPA•m/s and over, preferably 0.5 MPA•m/s and over, is used as a reinforced resin. As such resin, super engineering body plastic such as fluororesin, polyacetal, polyimide, polyamidimide, polyethersulfide, polyetherimide, and polyetheretherketone as well as phenol resin is used for example. Inorganic filler as well as filler of glass fiber or carbon fiber may be included in the resin.

In addition, the usage critical value PV used in the present specification with regard to resin indicates the upper limit value of the boundary of usage when resin is slid at a velocity V under a pressure P for use and is expressed by the product of the pressure P and the sliding velocity V. In general, no practical resin roller is made of resin with a PV value of less than 0.15 MPa•m/s.

In accordance with the present invention, a resin roller is produced through engagedly fixing a cylindrical portion, which has been either formed previously out of reinforced resin or made by rounding a reinforced resin sheet into a cylindrical form, within the hole of an annular ring body made of ultra-high-molecular-weight polyethylene.

The fixing together of the annular ring body and the cylindrical portion may be carried out by adhesion or pinning, however, it may also be carried out by means of an engaging mechanism wherein the inner surface of the annular ring body and the outer surface of the cylindrical portion are splined to be engaged with each other, or by means of a thread fastening mechanism wherein an internal thread is cut in the inner surface of the annular ring body and an external thread is cut in the outer surface of the cylindrical portion. The cylindrical portion engagedly fixed within the annular ring body may comprise either one cylinder or several separate cylindrical parts. Furthermore, a collar may be provided at each end surface of the cylindrical portion located at each end of the annular ring body.

The thickness of the cylindrical portion made of reinforced resin is normally between 1 and 10 mm, however, it is better to specify the thickness according to its inner diameter; the thickness should be controlled to a value within the range of 1 to 25% of the inner diameter.

In the present invention, in order to obtain a resin roller which may float on the water, the following relational expression between the weight W1 and volume V1 of the ultra-high-molecular-weight polyethylene annular ring body and the weight W2 and volume V2 of the reinforced resin cylindrical portion must be satisfied.

$$(W1 + W2) / (V1 + V2) \leq 1.0.$$

BRIEF DESCRIPTION OF THE DRAWINGS

Fig. 1 shows explanatory drawings of a resin roller in accordance with the present invention. Fig. 1(a) is a sectional view and Fig. 1(b) is a side view of the resin roller.

Fig. 2 is an explanatory sectional view of a modification of the resin roller shown in Fig. 1.

Fig. 3 is an explanatory sectional view of carrier rollers.

Fig. 4 is an explanatory sectional view of return rollers.

DETAILED DESCRIPTION OF THE PREFERRED EMBODIMENTS

Now the present invention will be described with reference to the drawings.

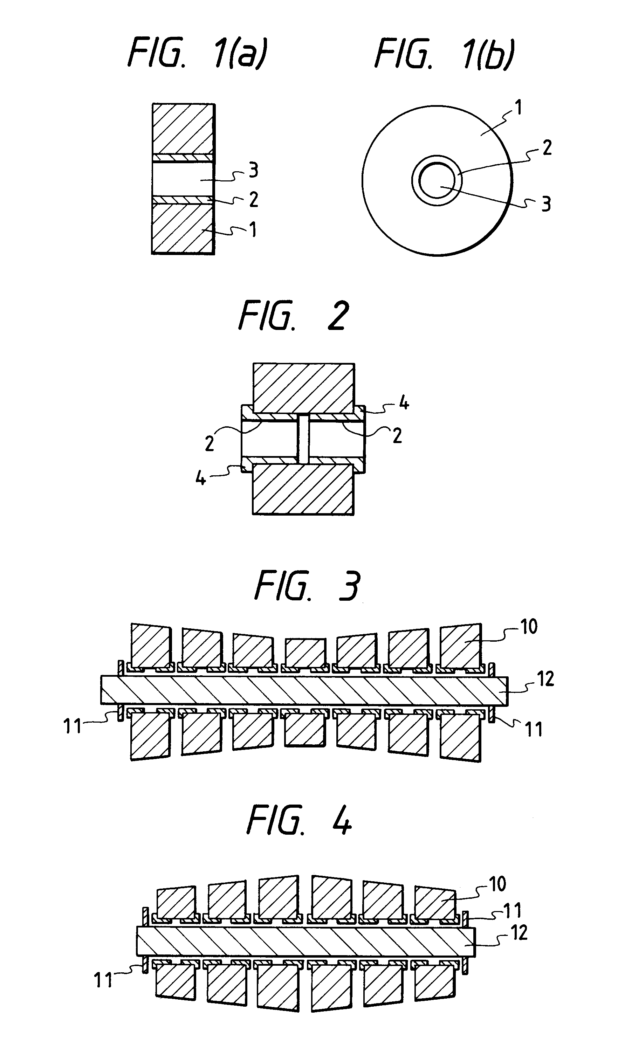

In Fig. 1, a roller comprising a reinforced resin cylindrical portion 2, being engagedly fixed within a hole 3 of an ultra-high-molecular-weight polyethylene annular ring body 1, is shown; Fig. 1(a) is a sectional view and Fig. 1(b) is a side view of the roller.

Fig. 2 is a sectional view showing a roller comprising two cylindrical parts 2 with collars 4 formed out of reinforced resin, which is engagedly fixed within a hole 3 of an ultra-high-molecular-weight polyethylene annular ring body 1.

Fig. 3 is an explanatory drawing of a cross section of carrier rollers comprising a combination of several rollers 10.

Fig. 4 is an explanatory drawing of a cross section of return rollers comprising a combination of several rollers 10.

The peripheral surface of rollers 10 illustrated in Figs. 3 and 4 form a gradient and each roller can independently correspond to a different revolution speed. In addition, 11 indicates a stop ring and 12 indicates a shaft in Figs. 3 and 4.

A resin roller in accordance with the present invention is superior in terms of wear and impact resistance as well as in lightness, since the roller main body is made of ultra-high-molecular-weight polyethylene. It is also superior in durability because a separate cylindrical part made of reinforced resin is engagedly fixed.

A resin roller of the present invention can float on the water if the relational expression $(W1 + W2) / (V1 + V2) \leq 1.0$ between the weight W1 and volume V1 of the ultra-high-molecular-weight polyethylene annular ring body and the weight W2 and Volume V2 of the reinforced resin cylindrical portion is satisfied.

Next the present invention will be further described with reference to particular embodiments.

Embodiment 1

A roller main body (outer diameter: 190 mm, inner diameter 53 mm, length: 60 mm) has been obtained through machining a round rod (outer diameter: 200 mm) made of ultra-high-molecular-weight polyethylene (molecular weight: 3 million). The weight was 1475 g and the volume was 1570 cm$^3$.

Two pieces of cylindrical compression molding with a flange (length: 30 mm, outer diameter: 53 mm, inner diameter: 34 mm, flange diameter: 60 mm, flange thickness: 4 mm) (weight: 45 g volume: 21 cm$^3$) made of graphite filled fluororesin (PV value: 1.33 MPA•m/s, density: 2.10 g/cm$^3$) have been engaged with the roller main body made of ultra-high-molecular-weight polyethylene to obtain a resin roller, which may float on the water and has a configuration shown in Fig. 2 with a PV value of 1.33 MPA•m/s.

Embodiment 2

A roller main body (outer diameter: 160 mm, inner diameter: 40 mm length: 80 mm) has been obtained through machining the same round rod made of ultra-high-molecular-weight polyethylene as in Embodiment 1. The weight was 1418 g and the volume was 1508 cm$^3$.

Then a cylindrical part (outer diameter: 40 mm, inner diameter: 30 mm, length: 80 mm) has been produced through machining a round rod (outer diameter: 40 mm) made of fluororesin filled polyacetal (specific gravity: 1.54, PV value: 0.78 MPa•m/s). The weight and volume of the cylindrical part were respectively 68 g and 44 cm$^3$. By

engaging this with the above-mentioned roller main body, a resin roller, with a PV value of 0.78 MPA·m/s, capable of floating on the water and having a configuration illustrated in Fig. 1 has been obtained.

Embodiment 3

A roller main body (outer diameter: 160 mm, inner diameter: 40 mm, length: 80 mm) has been obtained through machining the same ultra-high-molecular-weight polyethylene round rod as in Embodiment 1. The weight was 1418 g and the volume was 1508 $cm^3$. A cylindrical injection molding (outer diameter: 40 mm, inner diameter: 30 mm, length: 80 mm, weight: 66 g, volume 44 $cm^3$) made of fluororesin filled polyamidimide (specific gravity: 1.51, PV value: 1.75 MPA·m/s) has been engaged with the above-mentioned roller main body to obtain a resin roller, with a PV value of 1.75 MPA·m/s, capable of floating on the water, and having a configuration illustrated in Fig. 1.

## Claims

1. A resin roller, comprising an annular ring member made of ultra-high-molecular-weight polyethylene, and a cylindrical member made of reinforced resin having a usage critical PV value in the air of at least 0.2 MPa·m/s and engagedly fixed within a through hole of said annular ring member.

2. A resin roller according to claim 1, wherein the following relational expression between the weight W1 and volume V1 of said annular ring member and the weight W2 and volume V2 of said cylindrical member is maintained so that said roller is enabled to float on water:

$$(W1 + W2) / (V1 + V2) \leqq 1.0.$$

3. A resin roller according to claim 1 wherein said cylindrical member comprises several separate cylindrical parts.

4. A resin roller according to claim 1 wherein a collar is provided at each end surface of said cylindrical member.

5. A resin roller according to claim 1 wherein the thickness of said cylindrical member is within the range of 1 to 25% of its inner diameter.

6. A resin roller according to claim 1, wherein said PV value is at least 0.5 MPa·m/s.

7. A resin roller according to claim 1, wherein said polyethylene has a viscometric molecular weight of at least 1 million.

8. A resin roller, comprising an annular ring member made of ultra-high-molecular-weight polyethylene, and a cylindrical member made of reinforced resin, said cylindrical member engagedly fixed within a through hole of said annular ring member.

FIG. 1(a)

FIG. 1(b)

FIG. 2

FIG. 3

FIG. 4